# EUROPÄISCHE PATENTSCHRIFT

(11) **EP 2 718 171 B1**
(45) Veröffentlichungstag und Bekanntmachung des Hinweises auf die Patenterteilung: **22.03.2017**
(21) Anmeldenummer: 12716460.6
(22) Anmeldetag: 26.04.2012
(51) Int. Cl.: B62D 5/04, F16H 57/022, F16H 55/24

(54) **LENKSYSTEM IN EINEM FAHRZEUG**
STEERING SYSTEM IN A VEHICLE
SYSTÈME DE DIRECTION DANS UN VÉHICULE

(30) Priorität: 10.06.2011 DE 102011051003; 14.10.2011 DE 102011084510
(43) Veröffentlichungstag der Anmeldung: 16.04.2014
(73) Patentinhaber: Robert Bosch GmbH, 70442 Stuttgart (DE)
(72) Erfinder: PESCH, Michael, 71701 Schwieberdingen (DE); HELMI, Hussam, 71672 Marbach (DE)
(86) Internationale Anmeldenummer: PCT/EP2012/057599
(87) Internationale Veröffentlichungsnummer: WO 2012/167998

(56) Entgegenhaltungen:
- EP-A1- 1 065 132
- EP-A2- 0 860 346
- DE-A1-102007 019 324
- DE-A1-102010 002 569

## Beschreibung

Die Erfindung bezieht sich auf ein Lenksystem in einem Fahrzeug nach dem Oberbegriff des Anspruches 1.

### Stand der Technik

Bekannt sind Lenksysteme in Fahrzeugen, beispielsweise aus der DE 197 03 903 A1, die eine über das Lenkrad betätigbare Lenkwelle aufweisen, welche mit einer Zahnstange gekoppelt ist, über die die lenkbaren Räder mit einem gewünschten Radlenkwinkel einstellbar sind. Zur Lenkkraftunterstützung ist ein elektrischer Servomotor vorgesehen, der unmittelbar auf die Lenkwelle wirkt und diese mit einem unterstützenden Servomoment beaufschlagt.

Bei der Montage ist auf eine hohe Genauigkeit bei der Ausrichtung der Längsachse des elektrischen Servomotors zur Lenkwellenachse zu achten, damit eine spielfreie kinematische Kopplung zwischen der Rotorwelle des elektrischen Servomotors und der Lenkwelle gewährleistet ist. Dies ist Voraussetzung für einen hohen Wirkungsgrad und eine lange Betriebsdauer.

Die DE 10 2007 019 324 A1 offenbart ein Lenksystem mit elektrischer Servounterstützung, wobei das Motorgehäuse des elektrischen Servomotors an das Lenkgehäuse angeflanscht ist. Die Motorwelle des elektrischen Servomotors ist Träger einer Schnecke, die mit einem Schneckenrad auf der Lenkwelle kämmt. An axial gegenüberliegenden Seiten ist die Motorwelle in zwei Exzenterlagern gelagert, so dass über eine Einstellung der Exzenterlager die Position der Motorwelle in Bezug auf die Lenkwelle eingestellt werden kann.

Die EP 0 860 346 A2 zeigt ein Lenksystem mit elektrischem Servomotor, dessen Motorwelle über eine Schnecke und ein Schneckenrad mit der Lenkwelle kinematisch gekoppelt ist. Die Lenkwelle ist über ein Exzenterlager gelagert, welches benachbart zum Schneckenrad angeordnet ist. Die Lenkwelle ist außerdem über ein zweites Lager gelagert, das jedoch nicht als Exzenterlager ausgebildet ist.

### Offenbarung der Erfindung

Der Erfindung liegt die Aufgabe zu Grunde, ein Lenksystem in einem Fahrzeug so auszubilden, dass bei kompakten Abmessungen insbesondere im Bereich der Lenkkraftunterstützung eine hohe Effizienz bei langer Betriebsdauer gegeben ist.

Diese Aufgabe wird erfindungsgemäß mit den Merkmalen des Anspruches 1 gelöst. Die Unteransprüche geben zweckmäßige Weiterbildungen an.

Das erfindungsgemäße Lenksystem wird in Fahrzeugen eingesetzt, um den vom Fahrer vorgegebenen Lenkwinkel in einen Radlenkwinkel der lenkbaren Räder umzusetzen. Das Lenksystem umfasst eine Lenkspindel bzw. -welle, über die durch Betätigung des Lenkrades ein Lenkwinkel vorgegeben wird. Des Weiteren umfasst das Lenksystem ein Lenkgestänge mit einer Zahnstange, die mit der Lenkwelle kinematisch gekoppelt ist und über die die lenkbaren Räder mit einem gewünschten Radlenkwinkel eingestellt werden. Außerdem ist dem Lenksystem ein elektrischer Servomotor zur Erzeugung eines unterstützenden Antriebsmomentes zugeordnet, der mit der Lenkwelle gekoppelt ist. Bei einer Betätigung des Servomotors wird die Drehbewegung der Lenkwelle mit einem zusätzlichen Moment unterstützt.

Die Lenkwelle und die Motorwelle des Servomotors sind in einem gemeinsamen Lagergehäuse aufgenommen, was eine kompakte Ausführung im Bereich der Lenkkraftunterstützung erlaubt. Die Lenkwelle und die Motorwelle des Servomotors liegen insbesondere in einem Winkel zueinander, beispielsweise zumindest annähernd in einem 90°-Winkel, und sind zueinander versetzt angeordnet. Die kinematische Kopplung zwischen der Motorwelle des Servomotors und der Lenkwelle erfolgt über Getriebebauteile, die vorzugsweise als eine Schnecke und ein Schneckenrad ausgebildet sind, wobei die Schnecke einteilig mit der Motorwelle des Servomotors ausgeführt sein kann und das Schneckenrad drehfest mit der Lenkwelle gekoppelt ist.

Um Spiel in der kinematischen Übertragungskette zwischen der Motorwelle des Servomotors und der Lenkwelle kompensieren zu können, ist zumindest eine der Wellen - die Lenkwelle und/oder die Motorwelle des Servomotors - in einem einstellbaren Exzenterlager im Lagergehäuse aufgenommen. Über das Exzenterlager ist die Position der Welle radial zu ihrer Längsachse einstellbar. Diese Ausführung erlaubt es, die Wellen im Lagergehäuse zu montieren und anschließend über das Exzenterlager einen Spielausgleich durchzuführen. Insbesondere in der Ausführung, dass die Schnecke einteilig mit der Motorwelle des Servomotors ausgebildet und nach dem Einbau in das Lagergehäuse in Radialrichtung fest in Einzellagern ohne die Möglichkeit einer nachträglichen Justierung aufgenommen ist, kann über die Lagerung der Lenkwelle in einem Exzenterlager der Abstand zwischen Lenkwelle und Motorwelle auf ein gewünschtes Maß eingestellt werden. Die Motorwelle ist hierbei zweckmäßigerweise über lediglich zwei Einzellager im Lagergehäuse drehbar aufgenommen, wobei die Einzellager sich beispielsweise axial an gegenüberliegenden Seiten der Schnecke auf der Motorwelle befinden. Das statorferne Einzellager ist hierbei vorteilhafterweise als ein Festlager und das dem Stator zugewandte Lager als ein Loslager ausgeführt.

Die Lenkwelle ist in mindestens einem Exzenterlager einstellbar im Lagergehäuse aufgenommen, wohingegen die Motorwelle ohne derartige Einstellmöglichkeit im Lagergehäuse aufgenommen ist. Grundsätzlich möglich sind aber auch Ausführungen, in denen nur die Motorwelle über mindestens ein Exzenterlager gelagert ist, wohingegen die Lenkwelle ohne derartige Exzenterlager aufgenommen ist, oder Ausführungen, bei denen sowohl die Lenkwelle als auch die Motorwelle über jeweils mindestens ein Exzenterlager einstellbar im Lagergehäuse aufgenommen sind.

Dabei ist die Lenkwelle in zwei axial zueinander beabstandeten Exzenterlagern im Lagergehäuse aufgenommen. Die zwei Exzenterlager befinden sich hierbei vorteilhafterweise axial auf unterschiedlichen Seiten eines Getriebegliedes, welches Teil der kinematischen Übertragungskette zwischen dem elektrischen Servomotor und der Lenkwelle ist. Bei einer Ausführung der kinematischen Übertragung mithilfe einer Schnecke und eines Schneckenrades und einer Lagerung der Lenkwelle in zwei Exzenterlagern befinden sich diese vorzugsweise auf unterschiedlichen Seiten des fest mit der Lenkwelle gekoppelten Schneckenrades. Hierbei kann es zweckmäßig sein, dass mindestens ein Exzenterlager, ggf. beide Exzenterlager jeweils unmittelbar an eine Stirnseite des Getriebeglieds angrenzen, also in der Ausführung des Getriebeglieds als Schneckenrad auf Kontakt zu der jeweiligen Stirnseite des Schneckenrads liegen.

Im Fall von zwei axial zueinander beabstandeten Exzenterlagern an einer Welle bieten die Exzenterlager zwei unabhängige Einstellmöglichkeiten bzw. - freiheitsgrade. Um ein räumliches Kippen der Welle im Lagergehäuse zu vermeiden und die Welle bezogen auf eine Ideallage nur radial zur Wellenlängsachse zu verschieben, werden zweckmäßigerweise in einem gemeinsamen Montageschritt die beiden Exzenterlager simultan verstellt, so dass die Welle achsparallel in Radialrichtung verstellt wird. Je nach Stellrichtung ist ein Entfernen oder ein Annähern zwischen den Getriebegliedern möglich, deren Spiel zueinander eingestellt werden soll.

Das Exzenterlager umfasst zweckmäßigerweise eine Exzenterhülse, die drehbar im Lagergehäuse aufgenommen ist. In der Exzenterhülse ist ein Einzellager aufgenommen, in welchem die Welle gelagert ist. Durch Drehen der Exzenterhülse gegenüber dem Lagergehäuse kann die Wellenachse in Radialrichtung verstellt werden.

Gemäß weiterer vorteilhafter Ausführung ist die Exzenterhülse über ein Arretierglied im Lagergehäuse zu fixieren. Nachdem das gewünschte Lagerspiel durch Betätigen der Exzenterhülse eingestellt worden ist, wird die Exzenterhülse über das Arretierglied im Lagergehäuse festgesetzt, so dass auch die Relativposition zwischen den Getriebegliedern dauerhaft festgelegt ist.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Ansicht eines Lenksystems in einem Fahrzeug mit einem der Lenkwelle des Lenksystems zugeordneten Servomotor,
- Fig. 2: einen Schnitt längs durch die Lenkwelle im Bereich eines die Lenkwelle und einen elektrischen Servomotor aufnehmenden Lagergehäuses, wobei die Lenkwelle über zwei Exzenterlager in dem Lagergehäuse drehbar aufgenommen ist,
- Fig. 3: ein weiterer Schnitt längs durch die Lenkwelle,
- Fig. 4: einen Schnitt durch das Lagergehäuse quer zur Lenkwelle mit einer Darstellung des elektrischen Servomotors,
- Fig. 5: eine perspektivische Darstellung des Lagergehäuses.

In den Figuren sind gleiche Bauteile mit gleichen Bezugszeichen versehen.

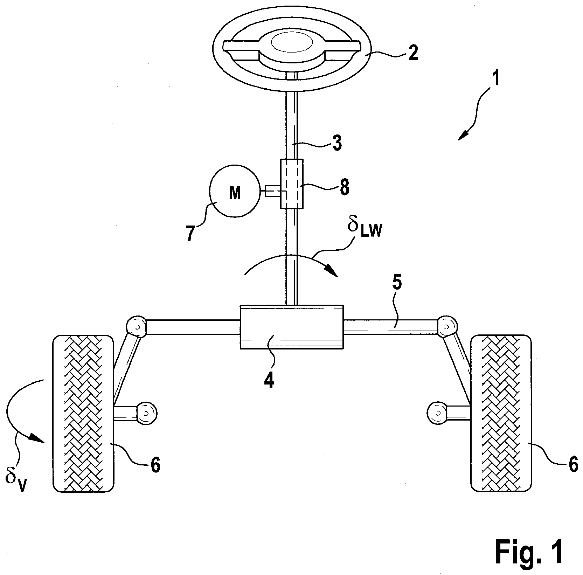

Das in Fig. 1 gezeigte Lenksystem 1 in einem Fahrzeug umfasst ein Lenkrad 2, eine Lenkwelle 3, ein Lenkgetriebe 4, ein Lenkgestänge 5 mit einer Zahnstange sowie lenkbare Räder 6. Der Fahrer gibt durch Betätigung des Lenkrades 2 einen Lenkwinkel δ_{LW} in der mit dem Lenkrad verbundenen Lenkwelle 3 vor, die über das Lenkgetriebe 4 die Zahnstange des Lenkgestänges 5 in Querrichtung verstellt, woraufhin an den lenkbaren Rädern der Radlenkwinkel δ_{V} eingestellt wird.

Zur Lenkkraftunterstützung dient ein elektrischer Servomotor 7, der über ein Getriebe ein unterstützendes Antriebsmoment in die Lenkwelle 3 einleitet. Das Getriebe umfasst eine Schnecke auf einem Wellenabschnitt der Motorwelle des Servomotors 7 und ein mit der Schnecke in Eingriff stehendes Schneckenrad, welche drehfest mit der Lenkwelle 3 verbunden ist. Die Lenkwelle 3 sowie die Motorwelle des elektrischen Servomotors 7 sind in einem Lagergehäuse 8 des Lenksystems 1 aufgenommen.

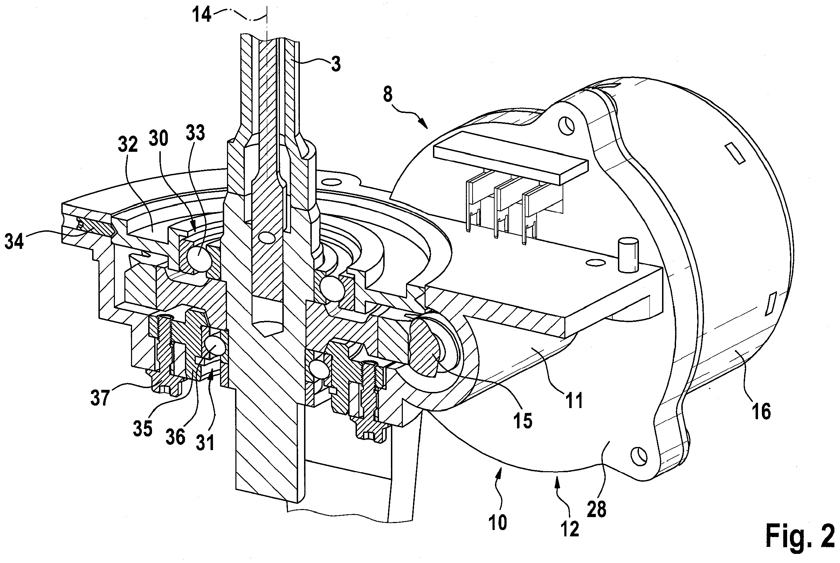

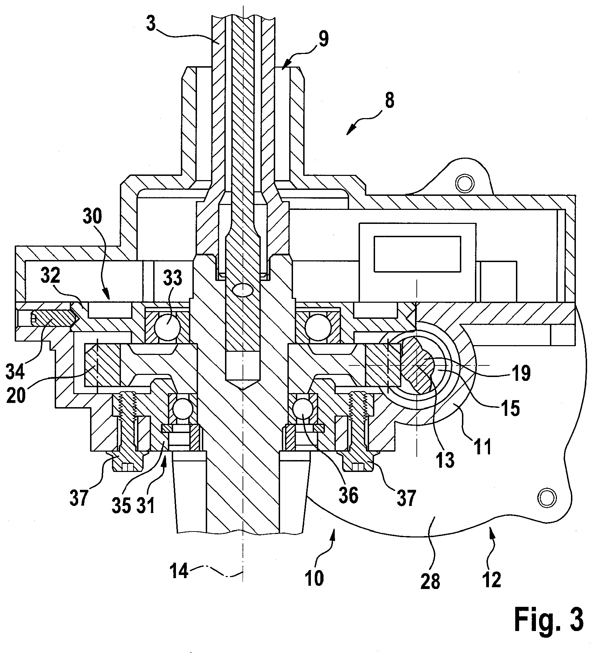

In den Figuren 2 und 3 ist ein erstes Ausführungsbeispiel für ein Lagergehäuse 8 mit darin aufgenommener Exzenterwelle 3 und Servomotor dargestellt. Das Lagergehäuse weist eine Aufnahmeöffnung 9 zur Lagerung der Lenkwelle 3 sowie ein Motorlagergehäuse 10 auf, das einteilig mit dem Lagergehäuse 3 ausgebildet ist und ein Motorwellengehäuse 11 sowie ein Statorgehäuse 12 umfasst. In dem Motorwellengehäuse 11 ist die Motorwelle 15 des elektrischen Servomotors aufgenommen. Das Statorgehäuse 12 ist als ein Statorflansch 28 ausgebildet, an dem der Stator 16 (Fig. 2) des Servomotors befestigt ist. Die Längsachsen 13 der Motorwelle 15 und 14 der Lenkwelle 3 liegen orthogonal und seitlich versetzt zueinander.

Das vom elektrischen Servomotor erzeugte Antriebsmoment wird über eine Schnecke 19, welche einteilig mit der Motorwelle 15 ausgebildet ist, auf ein Schneckenrad 20 übertragen, das drehfest mit der Lenkwelle 3 gekoppelt ist. Die Motorwelle 15 ist in zwei Einzellagern im Motorwellengehäuse 11 gelagert, wobei die beiden Einzellager die Motorwelle 15 in Radialrichtung am Motorwellengehäuse 11 fixieren. Die Lenkwelle 3 ist dagegen in zwei Exzenterlagern 30 und 31 im Lagergehäuse 8 aufgenommen, über die die Position der Lenkwelle 3 im Lagergehäuse einstellbar ist. Bei entsprechender Betätigung der beiden Exzenterlager 30 und 31 kann die Lenkwelle 3 bezogen auf ihre Längsachse 14 in Radialrichtung und parallel zu einer Ausgangsposition verschoben werden. Hierdurch kann das Spiel zwischen der Schnecke 19 und dem Schneckenrad 20 eingestellt werden.

Die beiden Exzenterlager 30 und 31 befinden sich an gegenüberliegenden Seiten des Schneckenrades 20 und liegen unmittelbar auf Kontakt zur jeweiligen Stirnseite des Schneckenrades 20. Das oben liegende, erste Exzenterlager 30 umfasst eine Exzenterhülse 32, die verdrehbar im Lagergehäuse 8 aufgenommen ist, sowie ein Einzellager 33 zur Aufnahme der Lenkwelle 3. Über einen Arretierstift 34 kann die Relativdrehlage der Exzenterhülse 32 im Lagergehäuse 8 fixiert werden.

Das zweite, unten liegende Exenterlager 31 ist analog zum ersten Exzenterlager 30 aufgebaut und umfasst eine in dem Lagergehäuse 8 drehbar aufgenommene Exzenterhülse 35, in der ein Einzellager 36 zur Lagerung der Lenkwelle 3 aufgenommen ist. Über Arretierstifte 37 ist die eingestellte Drehlage der Exzenterhülse 35 im Lagergehäuse 8 fixierbar.

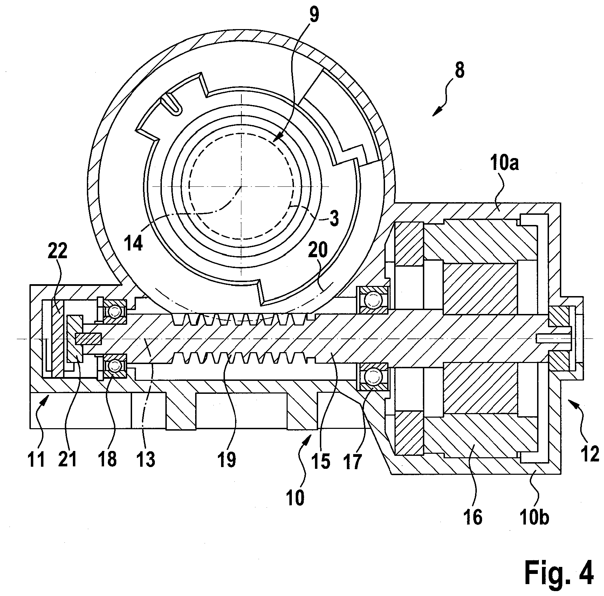

Wie dem Ausführungsbeispiel gemäß Fig. 4 zu entnehmen, erstreckt sich die Längsachse 13 des Motorlagergehäuses 10 orthogonal und seitlich versetzt zur Längsachse 14 der Aufnahmeöffnung 9 bzw. der eingesetzten Lenkwelle. Das Motorlagergehäuse 10 ist zweiteilig aufgebaut und umfasst zwei Gehäuseschalen 10a und 10b, von denen die erste Gehäuseschale 10a einteilig mit dem die Aufnahmeöffnung 9 bildenden ersten Gehäuseabschnitt ausgebildet ist und die zweite Gehäuseschale 10b separat hierzu ausgebildet und auf die erste Gehäuseschale 10a aufsetzbar ist. Insgesamt setzt sich das Motorlagergehäuse 10 aus einem Motorwellengehäuse 11, in welchem die Motorwelle 15 des Servomotors 7 aufgenommen ist, und einem Statorgehäuse 12 zur Aufnahme des Stators 16 des Servomotors zusammen.

Die Motorwelle 15 ist in zwei gehäuseseitigen Einzellagern 17 und 18 gelagert, von denen das dem Stator 16 benachbarte Einzellager 17, welches axial dem Stator unmittelbar vorgelagert ist, als Loslager und das statorferne Einzellager 18 als Festlager ausgebildet ist. Die beiden Einzellager 17 und 18 liegen axial auf gegenüberliegenden Seiten bezogen auf die Schnecke 19, die mit dem in Fig. 4 andeutungsweise dargestellten Schneckenrad 20 kämmt, welches drehfest mit der Lenkwelle 3 verbunden ist. Das Einzellager 18 befindet sich benachbart zur freien Stirnseite der Motorwelle 15. Der gesamte, den Stator 16 axial überragende Wellenabschnitt, welcher auch Träger der Schnecke 19 ist, ist einteilig mit der Motorwelle 15 ausgeführt bzw. wird von der Motorwelle 15 gebildet. Dadurch ist die Lagerung der Motorwelle 15 im Lagergehäuse 8 mit lediglich zwei Einzellagern 17, 18 möglich.

Wie Fig. 4 des Weiteren zu entnehmen, ist an der axial freien Stirnseite der Motorwelle 15 ein Magnetelement 21 befestigt, das gemeinsam mit der Motorwelle 15 umläuft. Dem Magnetelement 21 ist ein axial unmittelbar vorgelagerter Magnetfeldsensor 22 zugeordnet, der gehäusefest positioniert ist und das umlaufende Magnetfeld sensiert. Das Magnetelement 21 und der Magnetfeldsensor 22 bilden gemeinsam eine Rotorlagesensorik zur Ermittlung der aktuellen Drehlage der Motorwelle 15. Der Magnetfeldsensor 22 ist beispielsweise auf einer Elektronikplatine angeordnet, insbesondere auf einer Platine mit der Steuerungselektronik zur Steuerung des Servomotors.

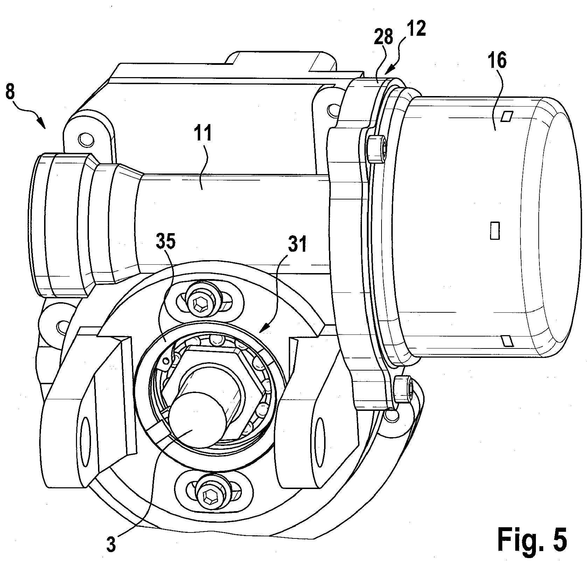

In Fig. 5 ist das Lagergehäuse 8 in einer Ansicht von unten dargestellt. Zu erkennen ist die Exzentrizität der Exzenterhülse 35, die Bestandteil des zweiten, unten liegenden Exzenterlagers 31 ist. Durch Verdrehen der Exzenterhülse 35 wird die radiale Position der Lenkwelle 3 im Lagergehäuse 8 eingestellt und damit auch das Spiel zwischen dem Schneckenrad, welches drehfest mit der Lenkwelle 3 verbunden ist, und der Schnecke auf der Motorwelle des elektrischen Servomotors.

## Patentansprüche

1. Lenksystem in einem Fahrzeug, mit einer Lenkwelle (3) zur Übertragung eines vom Fahrer vorgegebenen Lenkwinkels und mit einem elektrischen Servomotor (7) zur Erzeugung eines unterstützenden Antriebsmoments, der mit der Lenkwelle (3) gekoppelt ist, wobei die Lenkwelle (3) und die Motorwelle (15) des Servomotors (7) in einem gemeinsamen Lagergehäuse (8) aufgenommen sind, **dadurch gekennzeichnet, dass** die Lenkwelle (3) in zwei einstellbaren Exzenterlagern (30, 31) im Lagergehäuse (8) aufgenommen ist, wobei über die Exzenterlager (30, 31) die Position der Lenkwelle (3) radial zu ihrer Längsachse (14) einstellbar ist, und dass die zwei Exzenterlager (30, 31) im Lagergehäuse (8) axial auf unterschiedlichen Seiten eines Getriebeglieds (20) an der Lenkwelle (3) angeordnet sind, wobei das Getriebeglied (20) ein drehfest mit der Lenkwelle (3) verbundenes Schneckenrad (20) ist, das Teil der kinematischen Übertragungskette zwischen Servomotor (7) und Lenkwelle (3) ist, wobei beide Exzenterlager (30, 31) jeweils unmittelbar an eine Stirnseite des Schneckenrads (20) angrenzen.

2. Lenksystem nach Anspruch 1, **dadurch gekennzeichnet, dass** ausschließlich die Lenkwelle (3) in einstellbaren Exzenterlagern (30, 31) aufgenommen ist.

3. Lenksystem nach Anspruch 1 oder 2, **dadurch gekennzeichnet, dass** das Exzenterlager (30,31) eine Exzenterhülse (32, 35) mit einem Einzellager (33, 36) aufweist, wobei das Einzellager (33, 36) exzentrisch in der Exzenterhülse (32, 35) aufgenommen ist, die drehbar im Lagergehäuse (8) aufgenommen ist.

4. Lenksystem nach Anspruch 3, **dadurch gekennzeichnet, dass** die Exzenterhülse (32, 35) über ein Arretierglied (34, 37) im Lagergehäuse (8) fixierbar ist.

5. Lenksystem nach einem der Ansprüche 1 bis 4, **dadurch gekennzeichnet, dass** in dem Lagergehäuse (8) zwei Einzellager (17,18) mit radialer Fixierung zur Lagerung der Motorwelle (15) aufgenommen sind.

6. Lenksystem nach einem der Ansprüche 1 bis 5, **dadurch gekennzeichnet, dass** das Lagergehäuse (8) ein Motorwellengehäuse (11) zur Aufnahme der Motorwelle (15) aufweist, die sich orthogonal zur Lenkwellenachse (14) erstreckt.

## Claims

1. Steering system in a vehicle, comprising a steering shaft (3) for transmitting a steering angle predetermined by the driver, and comprising an electric servomotor (7) for producing an assisting driving torque, said servomotor being coupled to the steering shaft (3), wherein the steering shaft (3) and the motor shaft (15) of the servomotor (7) are accommodated in a common bearing housing (8), **characterized in that** the steering shaft (3) is accommodated in two adjustable eccentric bearings (30, 31) in the bearing housing (8), wherein the position of the steering shaft (3) is adjustable radially with respect to the longitudinal axis (14) thereof via the eccentric bearings (30, 31), and **in that** the two eccentric bearings (30, 31) in the bearing housing (8) are arranged on the steering shaft (3) axially on different sides of a gearing member (20), wherein the gearing member (20) is a worm wheel (20) which is connected to the steering shaft (3) for rotation therewith and which is part of the kinematic transmission linkage between servomotor (7) and steering shaft (3), wherein the two bearings (30, 31) are in each case directly adjacent to an end side of the worm wheel (20).

2. Steering system according to Claim 1, **characterized in that** only the steering shaft (3) is accommodated in adjustable eccentric bearings (30, 31).

3. Steering system according to Claim 1 or 2, **characterized in that** the eccentric bearing (30, 31) has an eccentric sleeve (32, 35) having an individual bearing (33, 36), wherein the individual bearing (33, 36) is accommodated eccentrically in the eccentric sleeve (32, 35), which is accommodated rotatably in the bearing housing (8).

4. Steering system according to Claim 3, **characterized in that** the eccentric sleeve (32, 35) is fixable in the bearing housing (8) via a locking member (34, 37).

5. Steering system according to one of Claims 1 to 4, **characterized in that** two individual bearings (17, 18) with radial fixing for the mounting of the motor shaft (15) are accommodated in the bearing housing (8).

6. Steering system according to one of Claims 1 to 5, **characterized in that** the bearing housing (8) has a motor shaft housing (11) for accommodating the motor shaft (15) which extends orthogonally to the steering shaft axis (14).

## Revendications

1. Système de direction dans un véhicule, comprenant un arbre de direction (3) pour le transfert d'un angle de direction prédéfini par le conducteur et comprenant un servomoteur électrique (7) pour générer un couple d'entraînement d'assistance qui est accouplé à l'arbre de direction (3), l'arbre de direction (3) et l'arbre de moteur (15) du servomoteur (7) étant reçus dans un logement de palier (8) commun, **caractérisé en ce que** l'arbre de direction (3) est reçu dans le logement de palier (8) dans deux paliers excentriques ajustables (30, 31), la position de l'arbre de direction (3) pouvant être ajustée radialement par rapport à son axe longitudinal (14) par le biais des paliers excentriques (30, 31), et **en ce que** les deux paliers excentriques (30, 31) sont disposés dans le logement de palier (8) axialement sur des côtés différents d'un organe de transmission (20) sur l'arbre de direction (3), l'organe de transmission (20) étant une roue à denture hélicoïdale (20) connectée de manière solidaire en rotation à l'arbre de direction (3), qui fait partie de la chaîne de transmission cinématique entre le servomoteur (7) et l'arbre de direction (3), les deux paliers excentriques (30, 31) étant à chaque fois immédiatement adjacents à un côté frontal de la roue à denture hélicoïdale (20).

2. Système de direction selon la revendication 1, **caractérisé en ce qu'**exclusivement l'arbre de direction (3) est reçu dans des paliers excentriques ajustables (30, 31).

3. Système de direction selon la revendication 1 ou 2, **caractérisé en ce que** le palier excentrique (30, 31) présente une douille excentrique (32, 35) avec un palier individuel (33, 36), le palier individuel (33, 36) étant reçu de manière excentrique dans la douille excentrique (32, 35), qui est reçue de manière rotative dans le logement de palier (8).

4. Système de direction selon la revendication 3, **caractérisé en ce que** la douille excentrique (32, 35) peut être fixée par le biais d'un organe de blocage (34, 37) dans le logement de palier (8).

5. Système de direction selon l'une quelconque des revendications 1 à 4, **caractérisé en ce que** deux paliers individuels (17, 18) sont reçus dans le logement de palier (8) avec une fixation radiale pour le support sur palier de l'arbre de moteur (15).

6. Système de direction selon l'une quelconque des revendications 1 à 5, **caractérisé en ce que** le logement de palier (8) présente un logement d'arbre de moteur (11) pour recevoir l'arbre de moteur (15), qui s'étend perpendiculairement à l'axe de l'arbre de direction (14).
